# EUROPEAN PATENT SPECIFICATION

(11) **EP 2 668 524 B1**
(45) Date of publication and mention of the grant of the patent: **21.01.2015**
(21) Application number: 12707889.7
(22) Date of filing: 27.01.2012
(51) Int. Cl.: G01V 3/12

(54) **SOURCE FOR ELECTROMAGNETIC SURVEYING**
QUELLE FÜR ELEKTROMAGNETISCHE ÜBERWACHUNG
SOURCE POUR LEVÉ ÉLECTROMAGNÉTIQUE

(30) Priority: 28.01.2011 GB 201101576
(43) Date of publication of application: 04.12.2013
(73) Proprietor: Electromagnetic Geoservices ASA, 7440 Trondheim (NO)
(72) Inventor: RAMSFJELL, Havard, 7020 Trondheim (NO); JENSEN, Hans Roger, 7040 Trondheim (NO); ELLINGSRUD, Svein, 7052 Trondheim (NO)
(74) Representative: Copsey, Timothy Graham
(86) International application number: PCT/GB2012/000088
(87) International publication number: WO 2012/101414

(56) References cited:
- US-A- 5 357 253
- US-A1- 2005 251 340
- Crains Graeme: "DEVELOPMENT OF A SHORT-BASELINE TRANSIENT EM MARINE SYSTEM AND ITS APPLICATION IN THE STUDY OF THE TAG HYDROTHERMAL MOUND", University of Toronto , 31 December 1997 (1997-12-31), XP002675280, Retrieved from the Internet: URL:http://marineem.ucsd.edu/Publications/ 1997/Cairns_Phd.pdf [retrieved on 1997-12-31]

## Description

The present invention relates to a source for electromagnetic (EM) surveying, in particular for seabed logging, and a method for producing a signal for EM surveying.

Currently, the most widely used techniques for geological surveying, particularly in sub-marine situations, are seismic methods. These seismic techniques are capable of revealing the structure of the subterranean strata with some accuracy. However, whereas a seismic survey can reveal the location and shape of a potential reservoir, it cannot normally reveal the nature of the reservoir, for example, whether the reservoir contains hydrocarbons or water.

However, while the seismic properties of hydrocarbon filled strata and water-filled strata do not differ significantly, their electromagnetic resistivities do differ. Thus, by using an electromagnetic surveying method, these differences can be exploited and the success rate in predicting the nature of a reservoir can be increased significantly.

Consequently, a method and apparatus embodying these principles form the basis of the present applicant's EP 1256019.

This contemplates a method for searching for a hydrocarbon containing subterranean reservoir which comprises applying a time varying electromagnetic field to subterranean strata; detecting the electromagnetic wave field response; seeking, in the wave field response, a component representing a refracted wave; and determining the presence and/or nature of any reservoir identified based on the presence or absence of a wave component refracted by hydrocarbon layer.

At present, electromagnetic surveying techniques are not widely used in practice. In general, the reservoirs of interest are about 1 km or more below the seabed. In order to carry out electromagnetic surveying as a standalone technique in these conditions, with any reasonable degree of resolution, short wavelengths are necessary. Unfortunately, such short wavelengths suffer from very high attenuation. Long wavelengths do not provide adequate resolution. For these reasons, seismic techniques tend to be preferred.

However, while longer wavelengths applied by electromagnetic techniques cannot provide sufficient information to provide an accurate indication of the boundaries of the various strata, if the geological structure is already known they can be used to determine the nature of a particular identified formation, if the possibilities for the nature of that formation have significantly differing electromagnetic characteristics. The resolution is not particularly important and so longer wavelengths which do not suffer from excessive attenuation can be employed.

The resistivity of seawater is about 0.3 ohm-m and that of the overburden beneath the seabed would typically be from 0.3 to 4 ohm-m, for example about 2 ohm-m. However, the resistivity of an oil reservoir is likely to be about 20-300 ohm-m. Typically, the resistivity of a hydrocarbon-bearing formation will be 20 to 300 times greater than a water-bearing formation. This large difference can be exploited using EM surveying.

Due to the different electromagnetic properties of a gas/oil bearing formation and a water bearing formation, one can expect a reflection and refraction of the transmitted field at the boundary of a gas/oil bearing formation. However, the similarity between the properties of the overburden and a reservoir containing water means that no reflection or refraction is likely to occur.

A refracted wave behaves differently, depending on the nature of the stratum in which it is propagated. In particular, the propagation losses in a hydrocarbon stratum are much lower than in a water-bearing stratum, while the speed of propagation is much higher. Thus, when an oil-bearing reservoir is present, and an EM field is applied, a strong and rapidly propagated refracted wave can be detected. This may therefore indicate the presence of the reservoir or its nature if its presence is already known.

An EM source such as an electric dipole transmitter antenna on or close to the sea floor can be used to induce (EM) fields and currents in the sea water and in the subsurface strata. In the sea water, the EM-fields are strongly attenuated due to the high conductivity in the saline environment, whereas a subsurface strata with less conductivity potentially can act as a "guide" for the EM-fields due to lower attenuation. If the frequency of the transmitted signal is low enough (of the order of 1 Hz), the EM-waves are able to penetrate deep into the subsurface, and deeply buried geological layers having higher electrical resistivity than the overburden (such as e.g. a hydrocarbon filled reservoir) will affect the EM-waves. Depending on the angle of incidence and state of polarisation, an EM wave incident upon a high resistive layer may excite a ducted (guided) wave mode in the layer. The ducted mode is propagated laterally along the layer and leaks energy back to the overburden and receivers positioned on the sea floor. The term "refracted" wave in this specification is intended to refer to this wave mode. Methods of marine electromagnetic surveying for hydrocarbon exploration typically require transmissions to be made with currents at around 1,000 to 10,000 A, in order to obtain measureable responses.

In addition to their use in hydrocarbon surveying before a well is drilled, sub-marine electromagnetic surveying techniques may also be used to appraise the characteristics of known hydrocarbon reservoirs before, during and after drilling, and to monitor hydrocarbon reservoirs before, during and after hydrocarbon extraction. Certain features of the method, for example, the frequency of the transmitted signal, may be adjusted according to the nature of the survey being undertaken and the physical parameters of the measurement area, in order to obtain information about certain regions of the subsurface or to tailor the measurements in other ways. However, the general principles of electromagnetic surveying remain the same regardless of the type of survey.

It will be appreciated by those skilled in the art that the accuracy of data obtainable using electromagnetic surveying methods depends on a number of factors, including the nature of the survey signal, the existing knowledge of the physical measurement area and the accuracy achievable by the transmitters and receivers. The accuracy and usefulness of the results of any survey depend on the quality of the survey data. Thus there is a need to improve the accuracy and scope of the data obtainable using such methods.

The present invention provides a system and method for generating an EM signal, with increased accuracy in the controllable characteristics of the generated EM field, and in addition, an increased flexibility of frequency range for use in different surveys. The system and method of the present invention allow improved tailoring of an EM source signal for a specific subterranean prospect and increased signal to noise ratios, resulting in increased accuracy of the EM data.

According to the invention, there is provided a transmitter system for generation of a high-current signal for marine electromagnetic surveying for hydrocarbon exploration, the system comprising a topside Power Supply Unit (PSU) arranged to transmit a suitably high voltage 3-phase signal at substantially constant amplitude, a Pulse Width Modulated (PWM) current source connected to the output of the topside PSU, wherein the PWM current source is capable of converting an input from the topside PSU into a stable internal DC voltage; thereby permitting conversion of an arbitrary digital periodic input to a suitably high current output signal, at least one towed Horizontal Electric Dipole (HED) antenna connected to the output of the PWM current source, wherein the HED antenna is arranged to be substantially neutrally buoyant when in use during the survey, a control system comprising a topside control unit having an operator interface and a PWM control unit having output current and voltage measurement devices and a time distribution network comprising a GPS receiver and network switches, arranged to acquire and distribute a time signal to the PWM control unit of the control system. The claims set out further features which may be comprised in the transmitter system. The invention also extends to a method of generating a high-current signal for marine electromagnetic surveying, as set out in the claims.

The system and method of the invention achieves improvements in EM surveying by providing a high-current wideband EM signal with sharp transition characteristics, produced by a HED antenna. Data obtained using such a signal is of increased accuracy. The transmitted EM signal is also largely independent of the AC power input characteristics. This increases the accuracy of the generated EM field, which also increases the accuracy of survey data.

The system and method of the invention can be particularly beneficial for the investigation of targets at large depths beneath the seabed, due to increases in the signal to noise ratio in the EM data acquired using the claimed system and method, which allows more information about the subsurface to be extrapolated from the data. Furthermore, the system and method of the invention can improve surveys in areas with complex geology and small targets, because the invention can permit EM surveying to be carried out successfully with higher frequencies than are normally used, which results in the increased resolution necessary to successfully investigate such targets.

The invention is further exemplified with reference to the following figures, in which:
Figure 1 shows an overview of a system according to the invention.
Figure 2 shows a schematic overview of a PWM current source suitable for use in the system according to the invention.
Figure 3 illustrates PWM.
Figure 4 shows voltage and current curves.
Figure 5 shows voltage and current curves.
Figure 6 shows measured internal DC voltage and antenna output voltage during current transition for a PWM current source according to the invention.

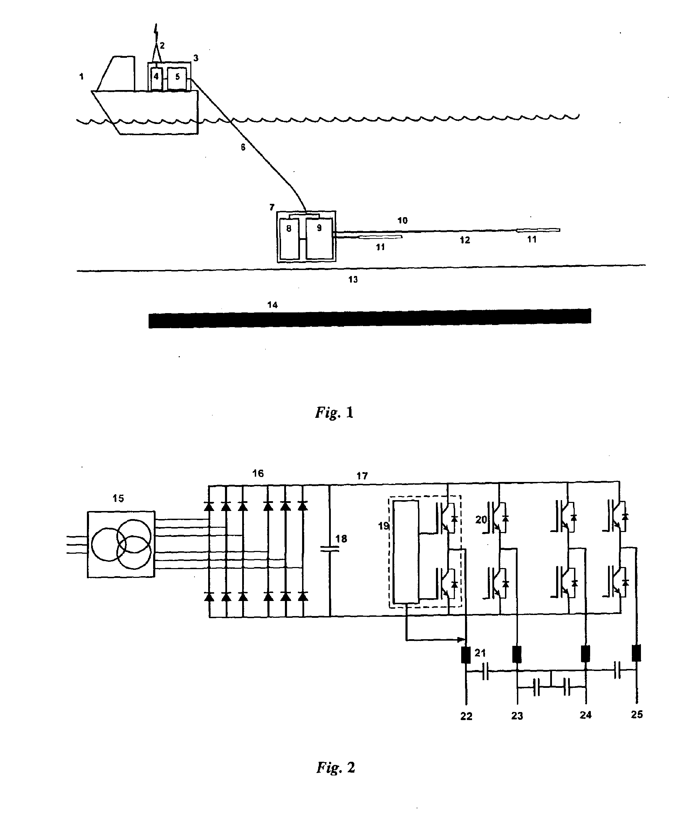

The topside PSU required by the system according to the invention is typically located on a survey vessel. An example of this arrangment is shown in Figure 1, where the survey vessel 1 carries the topside PSU 5. Alternatively, the topside PSU could be supported on land or located on a moving or stationary support. If the survey is being carried out in relatively shallow water, for example in water depths of 500 m or less, the PWM current source may be located out of the water, near the topside PSU, for example on the same survey vessel. If the survey is being carried out in deeper water, the PWM current source may be submersible, so that it can be operated at depths near the HED. In that case, the PWM current source will be connected to the topside PSU via an umbilical, which may comprise 3-phase high voltage main power conductors, auxiliary power conductors and a fibre optic communication link. The umbilical may be armored and serve as a tow cable for the PWM current source and HED.

Figure 1 shows one embodiment of the invention, in which the PWM current source is towed subsea. The seabed 13 is shown, and a possible location of a subsurface reservoir is marked with reference number 14. Survey vessel 1 carries GPS receiver and system clock 2, as well as topside system 3. The topside system 3 comprises topside control unit 4 and topside PSU 5. In this embodiment, a subsea towfish 7 comprises PWM control unit 8 (which in this embodiment is subsea) and PWM-modulated current source 9, which includes a current source PSU. The subsea towfish is connected to the topside system via umbilical 6, which in this embodiment also acts as the tow cable. An HED antenna 10 is towed. The HED antenna comprises two electrodes 11 and an antenna cable 12.

The subsea system may be submersible down to a depth of 4000 m below sea level. The umbilical 6 transports power and communication to the subsea components. The dedicated topside power supply unit located on the survey vessel provides power to the PWM current source and the subsea components. The control system including both topside and PWM control units provides operator interface, output signal measurement and time stamping, data file generation and system surveillance. A dedicated network is used to acquire and distribute time signals from a global positioning system (GPS) receiver to the PWM control unit.

The topside PSU located on the vessel transmits power to the subsea unit. The topside PSU output voltage may typically be between 100 and 1000 V (i.e. higher than the HED voltage). In many EM source systems, the subsea output current amplitude is modulated using variable topside PSU output voltage and only the current direction is controlled subsea. However in the system according to the present invention, all output regulation can be done in the PWM current source as true current regulation. In that case, there does not need to be modulation of amplitude in the topside PSU, i.e. it can transmit at constant amplitude. This simplifies the control system and increases the precision in the subsea output current.

The HED antenna consists of two electrodes connected to the PWM current source through low-impedance cables. The cables, electrodes and electrode spacing are selected for maximum dipole moment within the range of available output current and power. In addition, a buoyant material is added to the cables and electrodes to give the HED neutral buoyancy in sea water.

The long cables in the HED add inductivity to the PWM current source load, and increase the minimum transition time from -Imax to +Imax and vice versa. For optimal performance at high marine EM survey frequencies (for example, 50-100 Hz), the internal filter chokes in the PWM current source can be adapted for a specific load inductance according to the HED length. This frequency range covers the main frequencies relevant for marine electromagnetic surveying for hydrocarbon exploration.

Further advantages can be obtained if the HED is designed for maximum dipole moment within the maximum current and power from the PWM current source. For a given maximum current and power from the PWM current source, and for a given maximum efficient dipole length (dictated by data processing considerations), there will be an optimal configuration of antenna cable dimension (which affects antenna impedance), and an optimal electrode diameter and length. In addition, operational aspects should be taken into account when specifying the design of a HED for a survey.

In the embodiment shown in Figure 1, the umbilical can serve both as tow cable and link for power and communication between topside and subsea units. Such an umbilical must be designed to sustain the load from its own weight and the weight of the subsea units, added to the drag force when towing at a depth of 4000 m at speeds of up to 2 knots. The cable will therefore contain armoring suitable for its role as a stress member, as well as 3-phase main power conductors, auxiliary power conductors for instrumentation, safety grounding and finally a communications link which is preferably a fibre optic link.

The topside control unit provides operator interface, communicates with the subsea control system and receives time stamped measurements of output current and voltage. The measurements can be recorded in log files for use in post-processing of EM-data. Finally, the topside control system supervises operation of the other components in the source system.

In one embodiment, the PWM control unit can be synchronized with GPS time through a dedicated network. The control unit contains a table with the desired output signal and sends sample by sample at the correct sample rate to the current regulator in the PWM current source. At the same sample rate, it measures output current and voltage from the current source, time-stamps the measurements and transports them to the topside control unit. The control unit can adjust the phase of the desired output signal to fit with a fixed point in time, depending on the processing scheme of the EM-data.

It should be noted that it is not necessary for the current regulator to relate to absolute time.

The core of the system is the current source converting the digital periodic, arbitrary signal to a high current output signal. Such a signal must be transmitted with a high enough current to obtain measureable responses in a marine EM survey, for example the signal current may be around 1,000 A or up to around 10,000 A. The current source is powered with 3-phase alternating current (AC) high voltage power from the topside power supply unit. The power frequency should be selected to form a good compromise between prevention of capacitive currents in the umbilical and current source transformer size and weight. The high voltage power may be transformed down to a lower voltage in a sigma-delta transformer and rectified in a 12-pulse rectifier bridge. Use of a relatively high frequency and the 12-pulse rectifier bridge minimises ripple in the resulting DC voltage. Capacitors can be used to further stabilize the DC voltage (reduce DC ripple), and to absorb the energy fed back from the antenna during rapid changes in the output current.

In the PWM current source, high-power transistors are used as switches, and can be turned either on or off. Switching can be controlled by the PWM control unit. A high-power transistor unit is shown in principle in Figure 2. The unit comprises a 3-phase transformer 15, a 12-pulse rectifier bridge 16, eight power transistors with surge protection one of which is identified by number 20, inverter unit 19, DC-link 17, capacitor 18 and output current filter 21. The outputs 22 - 25 are output 1+, output 2+, output 1- and output 2-respectively. The unit shown in figure 2 comprises four inverter modules, to be controlled in pairs, each pair connected to an individual output. In general, the PWM current source may comprise protection functionality against short circuits and open circuits on inputs and outputs, which may be hardware based and/or software based, and which may be multiply redundant.

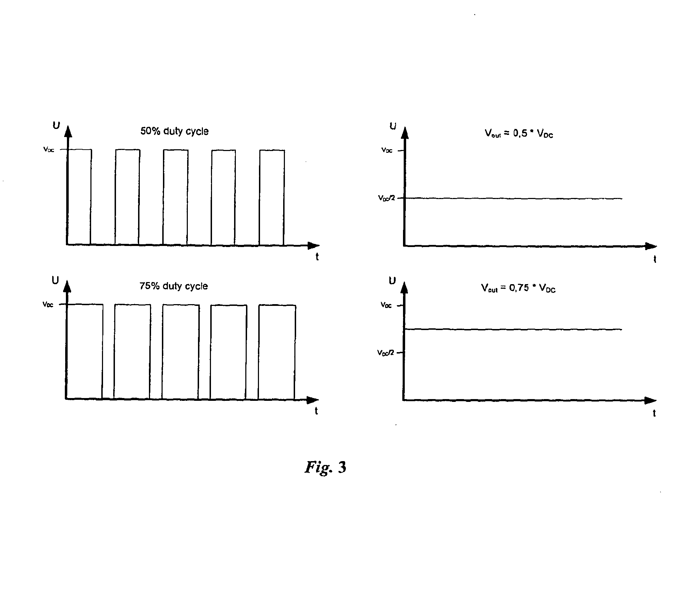

If one transistor in a pair is on, then the other is off. Thus, the voltage at the common point of the two transistors is then either 0 or +VDC. In practice, the transistors are switched with a high frequency and a choke is used as seen in Figure 2. Then the voltage on the antenna output will be equal to the time-average of the voltage at the common point. This means that if the transistors are switched to active for 75% of the period, the resulting voltage on the antenna output will be +VDC * 0,75. This factor is called the duty cycle. This principle is illustrated in Figure 3 for a 50% duty cycle and a 75% duty cycle. The current regulator measures the current in each transistor module and adjusts the pulse width and duty cycle to obtain the desired amplitude at any given time. This can be done at a very high sample rate. If the sample rate is significantly higher than the base frequency of the output EM signal, then the current regulation can be very fast and accurate.

The PWM current source can use high-power Insulated Gate Bipolar Transistors (IGBTs) or power Metal-Oxide Semiconductor Field Effect Transistors (MOS-FETs) with transient voltage suppressors, in order to chop the internal DC voltage.

For a smoother output signal, several transistors can be switched in parallel, but phase delayed. This results in a very high apparent switching frequency. This also reduces latency in current regulation and reduces output ripple. The output signal can be filtered both internally in the PWM current source and externally in the HED resulting in a very stable current signal.

By using 4 inverter modules in the PWM current source, controlled in pairs, it is possible to transmit completely independent source signals on the two pairs. This can be used for dual output, with 2 non-parallel HEDs to generate independent EM fields in two directions. The two inverter pairs can also be interconnected, synchronized and controlled with a single source signal for maximum current in a single HED.

The transition period from -Imax to +Imax and vice versa in the PWM current source may be limited by the inductance in the HED. A short HED will have a lower inductance and give a shorter transition period, hence increasing the maximum output signal frequency. However, this reduces the dipole moment and hence the strength of the generated EM-field. Using a HED which is impedance matched with the PWM current source and designed for maximum dipole moment within the maximum current and power from the PWM current source, can at the same time allow use of frequencies from 0-50 Hz, which is within the range of interest for marine EM surveying.

The internal DC voltage of the PWM current source can thus be 3-8 times higher than the nominal output voltage, depending on the load connected. This, optionally combined with large capacitors, provides an energy reserve for extremely fast transition from -Imax to Imax and vice versa. The high DC voltage also means the system has large flexibility regarding load impedance. For EM use, it is preferable to transmit the maximum current achievable with the equipment, in order to obtain maximum dipole moment.

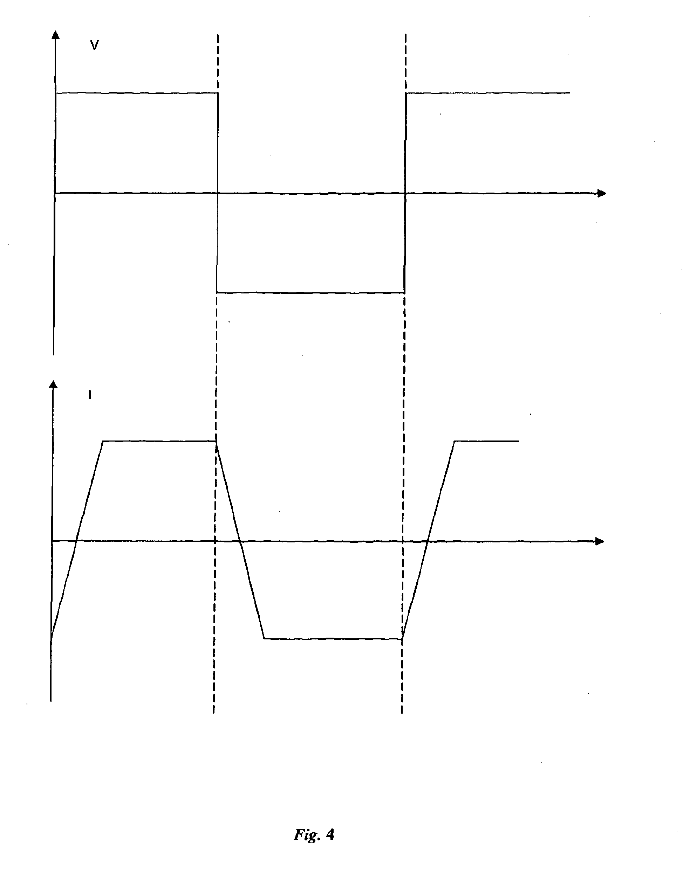

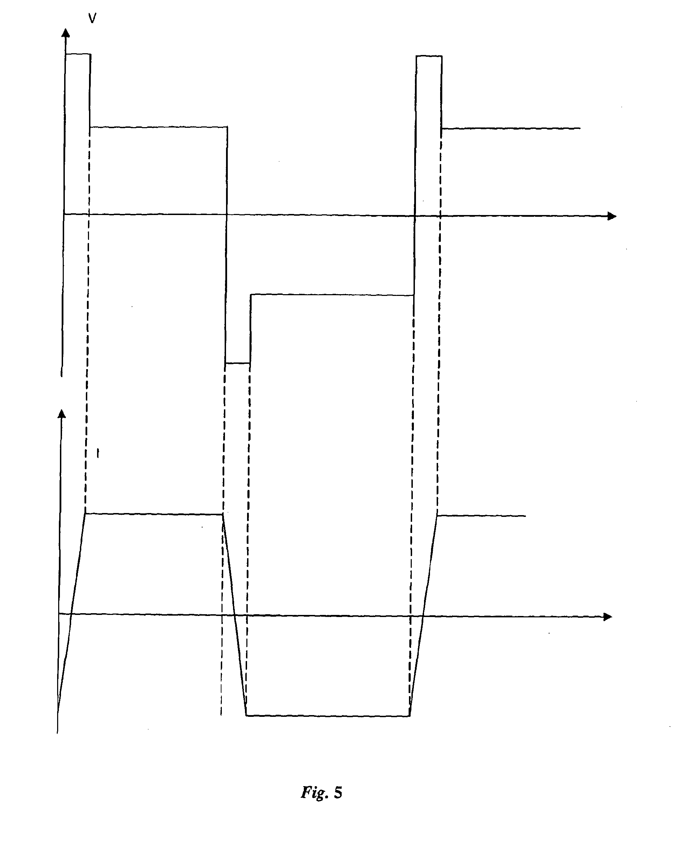

Figures 4 and 5 illustrate example antenna voltages and currents against time. Figure 4 illustrates the existing state of the art and Figure 5 shows what can be achieved with a system according to the present invention, wherein a higher voltage (3-8 times higher than the nominal output voltage) is provided at transition. The voltage curve in Figure 5 gives a shorter current rise time than that in Figure 4, i.e. the invention can provide a higher bandwidth output signal compared to known systems. Current rise times of the order of 7 ms for a rise from -1500 A to +1500 A can be achieved using the system according to the present invention, which is a significant improvement over rise times achievable by previous systems, which are typically of the order of 140 ms for such a rise.

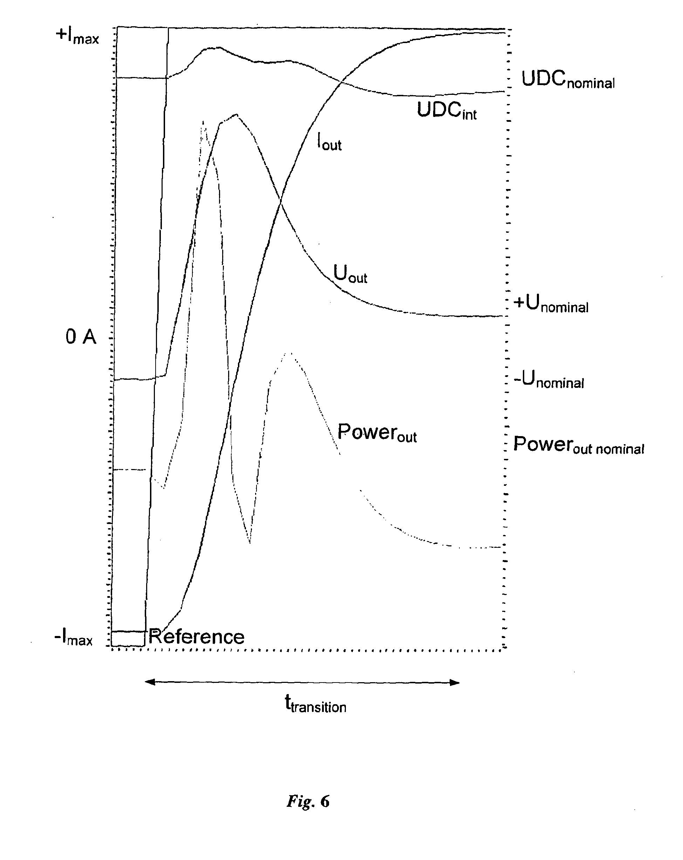

In Figure 6, the measured internal DC voltage and antenna output voltage during current transition for a PWM current source usable in a system according to the invention is shown. The horizontal axis represents time and current/voltage/power are represented on the vertical axes. The sign labeled "tₜᵣₐₙₛᵢₜᵢₒₙ" refers to the time required for a transition from -Imax to +Imax.

The trace marked "Reference" is an example desired current profile of the device. The trace marked "Iout" is the measured output current to the HED. The trace marked "Uout" is the output voltage to the HED. The trace marked "Power out" is the measured output power from the PWM current source, and is the product of "Iout" and "Uout". Finally, the trace marked "UDCint" is the internal DC voltage. We can see from the graph that when the current is switched from -Imax to +Imax, the output voltage "Uout" increases to a value approximately 3 times its nominal value. This signifies that the current regulator unleashes its maximum capability of turning the current flow in the HED. We also see that the "UDCint" increases slightly during the current transition, signifying that energy is absorbed from the HED due to its inductance. Finally, we see that the output power "Power out" has two spikes during the transition period. This signifies that the output power is increased to speed up the transition, whereas the power dip between the spikes comes when the output current passes zero.

The system and method of the present invention, by inclusion of a PWM current source according to the claims, provides a high-current wideband EM signal with sharp transition characteristics. The internal DC voltage stabilization, PWM signal generation and true current regulation of the output signal decouple the output signal from the AC input power characteristics, provide antenna load immunity and permit high accuracy EM field generation.

Any references herein to "seabed" or "subsea" should be understood as extending to any relevant body of water, such as a lake, in which such surveys may be undertaken.

## Claims

1. A transmitter system for generation of a high-current signal for marine electromagnetic surveying for hydrocarbon exploration, the system comprising:
a topside PSU (5) arranged to transmit a suitably high voltage 3-phase signal at substantially constant amplitude;
a PWM current source (9) connected to the output of the topside PSU, wherein the PWM current source is capable of converting an input from the topside PSU into a stable internal DC voltage; thereby permitting conversion of an arbitrary digital periodic input to a suitably high current output signal;
at least one towed HED antenna (10) connected to the output of the PWM current source, wherein the HED antenna (10) is arranged to be substantially neutrally buoyant when in use during a survey;
a control system comprising a topside control unit (4) having an operator interface and a PWM control unit having output current and voltage measurement devices;
a time distribution network comprising a GPS receiver and network switches, arranged to acquire and distribute a time signal to the PWM control unit of the control system.

2. The transmitter system of claim 1, wherein the topside PSU and/or the PWM current source is located on a vessel.

3. The transmitter system of claim 1, wherein the PWM current source is towed and water submersible, usable at depths down to 4000m below the sea surface, and is connected to the topside PSU via an umbilical, and wherein the umbilical may be armored and serve as a tow cable.

4. The transmitter system of claim 3, wherein the umbilical comprises 3-phase high voltage main power conductors, auxiliary power conductors and a fiber optic communication link.

5. The transmitter system of any preceding claim, wherein the HED antenna is impedance matched with the PWM current source.

6. The transmitter system of any preceding claim, wherein the system comprises two HED antennas, which may be in substantially the same horizontal plane during surveying.

7. The transmitter system of any preceding claim, wherein the PWM current source comprises a sigma-delta transformer and a twelve-pulse rectifier bridge, or wherein the PWM current source comprises high-power IGBTs and/or power MOS-FET transistors, optionally with transient voltage suppressors, to chop the internal DC-voltage.

8. The transmitter system of any preceding claim, wherein the PWM current source comprises four inverter modules which are controlled in pairs, wherein the two pairs of inverter modules may be connected to a single HED, or connected to two independent HEDs.

9. The transmitter system of any preceding claim, wherein the PWM current source comprises includes hardware or software protection functionality against short circuits and open circuits on inputs and outputs.

10. The transmitter system of any preceding claim, wherein the PWM current source comprises capacitors to reduce DC ripple and to absorb the energy fed back from the HED during rapid changes in the output current.

11. A method of generating a high-current signal for marine electromagnetic surveying for hydrocarbon exploration, the method comprising:
transmitting an input high voltage 3-phase signal at substantially constant amplitude from a topside PSU (5);
converting the input signal into a stable internal DC voltage in a PWM current source (3), thereby converting an arbitrary digital periodic input to a suitably high current output signal;
connecting at least one towed HED antenna (10) to the output of the PWM current source, wherein the HED antenna is arranged to be substantially neutrally buoyant when in use during a survey;
controlling the system using a topside control unit (4) having an operator interface and a PWM control unit having output current and voltage measurement devices;
distributing a time signal to the PWM control unit of the control system using a time distribution network comprising a GPS receiver and network switches.

12. The method of claim 11, wherein the PWM control unit is operated such that the internal DC voltage in the PWM current source is 3-8 times higher than the nominal output voltage at maximum output current and wherein the output power during current transition is 2-3 times higher than the nominal output power.

13. The method of claim 11, wherein the frequency of the high current output signal is between 0 and 50 Hz.

14. The method of claim 11, further comprising the step of chopping the internal DC voltage in the PWM current source to the desired output signal at a switching frequency higher than the frequency of the output signal, wherein the switching frequency is between 50 and 100 Hz.

15. The method of claim 11, wherein the PWM current source comprises several transistors, the method further comprising switching the several transistors in parallel with a phase delay, or the PWM current source comprises four inverter modules, the method further comprising controlling the modules in pairs.

16. The method of claim 11, further comprising the step of filtering the high current output signal using capacitors and/or chokes to reduce ripple and high- frequency noise.

## Patentansprüche

1. Sendersystem zur Erzeugung eines Hochstromsignals für elektromagnetische Meeresüberwachung zur Erkundung von Kohlenwasserstoffen, wobei das System aufweist:
eine an der Oberseite angeordnete Stromversorgungseinheit (5), die dazu ausgelegt ist, ein 3-Phasen-Signal mit geeignet hoher Spannung mit im Wesentlichen konstanter Amplitude zu senden;
eine PWM-Stromquelle (9), die mit dem Ausgang der an der Oberseite angeordneten Stromversorgungseinheit verbunden ist, wobei die PWM-Stromquelle einen Eingang von der an der Oberseite angeordneten Stromversorgungseinheit in eine stabile interne Gleichstrom-Spannung umwandeln kann, wodurch die Umwandlung eines willkürlichen digitalen periodischen Eingangs in ein Ausgangssignal mit geeignet hohem Strom ermöglicht wird;
wenigstens eine geschleppte HED-Antenne (10), die mit dem Ausgang der PWM-Stromquelle verbunden ist, wobei die HED-Antenne (10) dazu ausgelegt ist, im Wesentlichen neutral zu schwimmen, wenn sie während einer Überwachung im Einsatz ist;
ein Steuersystem, das eine an der Oberseite angeordnete Steuereinheit (4), die eine Betreiberschnittstelle hat, und eine PWM-Steuereinheit, die Ausgangsstrom- und Spannungsmessvorrichtungen hat, aufweist;
ein Zeitverteilungsnetzwerk, das einen GPS-Empfänger und Netzwerk-Schalter aufweist, das dazu ausgelegt ist, ein Zeitsignal zu empfangen und an die PWM-Steuereinheit des Steuersystems zu verteilen.

2. Sendersystem nach Anspruch 1, wobei sich die an der Oberseite angeordnete Stromversorgungseinheit und/oder die PWM-Stromquelle auf einem Schiff befinden.

3. Sendersystem nach Anspruch 1, wobei die PWM-Stromquelle geschleppt und im Wasser versenkbar ist, bei Tiefen bis zu 4000 m unter der Meeresoberfläche verwendbar ist, und über einen Versorgungsschlauch mit der an der Oberseite angeordneten Stromversorgungseinheit verbunden ist, und wobei der Versorgungsschlauch gepanzert sein und als Schleppkabel dienen kann.

4. Sendersystem nach Anspruch 3, wobei der Versorgungsschlauch 3-Phasen-Hauptstromleiter für hohe Spannung, Hilfsstromleiter und eine Glasfaserkommunikationsverbindung aufweist.

5. Sendersystem nach einem der vorhergehenden Ansprüche, wobei die HED-Antenne an die PWM-Stromquelle impedanzangepasst ist.

6. Sendersystem nach einem der vorhergehenden Ansprüche, wobei das System zwei HED-Antennen aufweist, die während der Überwachung in im Wesentlichen derselben horizontalen Ebene liegen können.

7. Sendersystem nach einem der vorhergehenden Ansprüche, wobei die PWM-Stromquelle einen Sigma-Delta-Transformator und eine zwölfpulsige Gleichrichterbrücke aufweist, oder wobei die PWM-Stromquelle Hochleistungs-IGBTs und/oder MOSFET-Leistungstransistoren aufweist, optional mit Überspannungsschutz, um die interne Gleichstrom-Spannung abzuschneiden.

8. Sendersystem nach einem der vorhergehenden Ansprüche, wobei die PWM-Stromquelle vier Invertermodule aufweist, die paarweise gesteuert werden, wobei die beiden Paare von Invertermodulen mit einer einzigen HED oder mit zwei unabhängigen HEDs verbunden werden können.

9. Sendersystem nach einem der vorhergehenden Ansprüche, wobei die PWM-Stromquelle Hardware- oder Softwareschutz-Funktionalität gegen Kurzschlüsse und offene Schaltungen bei Eingängen und Ausgängen aufweist.

10. Sendersystem nach einem der vorhergehenden Ansprüche, wobei die PWM-Stromquelle Kondensatoren aufweist, um Gleichstromwelligkeit zu verringern und die Energie, die während schneller Änderungen des Ausgangsstroms von der HED zurückgeführt wird, zu absorbieren.

11. Verfahren zum Erzeugen eines Hochstromsignals für elektromagnetische Meeresüberwachung zur Erkundung von Kohlenwasserstoffen, wobei das Verfahren umfasst:
Senden eines 3-Phasen-Eingangsignals mit hoher Spannung mit im Wesentlichen konstanter Amplitude von einer an der Oberseite angeordneten Stromversorgungseinheit (5);
Umwandeln des Eingangssignals in eine stabile interne Gleichstrom-Spannung in einer PWM-Stromquelle (3), wodurch ein willkürlicher digitaler periodischer Eingang in ein Ausgangssignal mit geeignet hohem Strom umgewandelt wird;
Verbinden wenigstens einer geschleppten HED-Antenne (10) mit dem Ausgang der PWM-Stromquelle, wobei die HED-Antenne dazu ausgelegt ist, im Wesentlichen neutral zu schwimmen, wenn sie während einer Überwachung im Einsatz ist;
Steuern des Systems unter Verwendung einer an der Oberseite angebrachten Steuereinheit (4), die eine Betreiberschnittstelle hat, und einer PWM-Steuereinheit, die Ausgangsstrom- und Spannungsmessvorrichtungen hat;
Verteilen eines Zeitsignals an die PWM-Steuereinheit des Steuersystems unter Verwendung eines Zeitverteilungsnetzwerks, das einen GPS-Empfänger und Netzwerk-Schalter aufweist.

12. Verfahren nach Anspruch 11, wobei die PWM-Steuereinheit so betrieben wird, dass die interne Gleichstrom-Spannung in der PWM-Stromquelle 3-8 mal höher ist, als die Ausgangs-Nennspannung bei maximalem Ausgangsstrom, und wobei die Ausgangsleistung während des Stromübergangs 2-3 mal höher ist, als die Ausgangs-Nennleistung.

13. Verfahren nach Anspruch 11, wobei die Frequenz des Hochstrom-Ausgangssignals zwischen 0 und 50 Hz liegt.

14. Verfahren nach Anspruch 11, das des Weiteren den Schritt des Abschneidens der internen Gleichstrom-Spannung in der PWM-Stromquelle auf das gewünschte Ausgangssignal mit einer Schaltfrequenz umfasst, die höher als die Frequenz des Ausgangssignals ist, wobei die Schaltfrequenz zwischen 50 und 100 Hz liegt.

15. Verfahren nach Anspruch 11, wobei die PWM-Stromquelle mehrere Transistoren aufweist, wobei das Verfahren des Weiteren das Parallelschalten der mehreren Transistoren mit einer Phasenverzögerung umfasst, oder die PWM-Stromquelle vier Invertermodule aufweist, wobei das Verfahren des Weiteren das paarweise Steuern der Module umfasst.

16. Verfahren nach Anspruch 11, das des Weiteren den Schritt des Filterns des Hochstrom-Ausgangssignals unter Verwendung von Kondensatoren und/oder Drosseln umfasst, um Welligkeit und Hochfrequenzrauschen zu verringern.

## Revendications

1. Système émetteur pour la génération d'un signal à courant élevé pour le levé électromagnétique marin en vue d'une prospection des gisements d'hydrocarbures, le système comprenant :
un PSU (bloc d'alimentation) de surface (5) agencé pour émettre un signal triphasé haute tension approprié à une amplitude sensiblement constante ;
une source de courant PWM (à modulation d'impulsion en largeur) (9) connectée à la sortie du PSU de surface, dans lequel la source de courant PWM est capable de convertir une entrée du PSU de surface en une tension continue interne stable ; permettant ainsi la conversion d'une entrée périodique numérique arbitraire en un signal de sortie à courant élevé approprié ;
au moins une antenne HED (dipôle électrique horizontal) remorquée (10) connectée à la sortie de la source de courant PWM, dans lequel l'antenne HED (10) est agencée pour être à flottabilité sensiblement neutre lors d'une utilisation pendant un levé ;
un système de commande comprenant une unité de commande de surface (4) ayant une interface opérateur et une unité de commande PWM ayant des dispositifs de mesure de courant et de tension de sortie ;
un réseau de répartition temporelle comprenant un récepteur GPS et des commutateurs de réseau, agencé pour acquérir et répartir un signal horaire à l'unité de commande PWM du système de commande.

2. Système émetteur selon la revendication 1, dans lequel le PSU de surface et/ou la source de courant PWM sont situés sur un navire.

3. Système émetteur selon la revendication 1, dans lequel la source de courant PWM est remorquée et submersible dans l'eau, utilisable à des profondeurs jusqu'à 4000 m sous la surface de la mer, et est connectée au PSU de surface via un câble ombilical, et dans lequel le câble ombilical peut être armé et servir de câble de remorquage.

4. Système émetteur selon la revendication 3, dans lequel le câble ombilical comprend des conducteurs de puissance principaux haute tension triphasée, des conducteurs de puissance auxiliaire et un lien de communication à fibre optique.

5. Système émetteur selon l'une quelconque des revendications précédentes, dans lequel l'antenne HED est adaptée en impédance à la source de courant PWM.

6. Système émetteur selon l'une quelconque des revendications précédentes, dans lequel le système comprend deux antennes HED, qui peuvent être sensiblement dans le même plan horizontal pendant le levé.

7. Système émetteur selon l'une quelconque des revendications précédentes, dans lequel la source de courant PWM comprend un transformateur sigma-delta et un pont redresseur à douze impulsions, ou dans lequel la source de courant PWM comprend des IGBT (transistors bipolaire à porte isolée) haute puissance et/ou des transistors MOS-FET de puissance, facultativement avec des suppresseurs de tension transitoire, pour hacher la tension continue interne.

8. Système émetteur selon l'une quelconque des revendications précédentes, dans lequel la source de courant PWM comprend quatre modules inverseurs qui sont commandés en paires, dans lequel les deux paires de modules inverseurs peuvent être connectées à un seul HED, ou connectées à deux HED indépendantes.

9. Système émetteur selon l'une quelconque des revendications précédentes, dans lequel la source de courant PWM comprend une fonctionnalité de protection matérielle ou logicielle contre des courts-circuits et des circuits ouverts sur des entrées et des sorties.

10. Système émetteur selon l'une quelconque des revendications précédentes, dans lequel la source de courant PWM comprend des condensateurs pour réduire l'ondulation de courant continu et pour absorber l'énergie alimentée en retour par le HED pendant des changements rapides du courant de sortie.

11. Procédé de génération d'un signal à courant élevé pour le levé électromagnétique marin en vue d'une prospection des gisements d'hydrocarbures, le procédé comprenant :
la transmission d'un signal triphasé haute tension d'entrée à une amplitude sensiblement constante depuis un PSU de surface (5) ;
la conversion du signal d'entrée en une tension continue interne stable dans une source de courant PWM (3), convertissant ainsi une entrée périodique numérique arbitraire en un signal de sortie à courant élevé approprié ;
la connexion d'au moins une antenne HED remorquée (10) à la sortie de la source de courant PWM, dans lequel l'antenne HED est agencée pour être à flottabilité sensiblement neutre lors d'une utilisation pendant un levé ;
la commande du système à l'aide d'une unité de commande de surface (4) ayant une interface opérateur et une unité de commande PWM ayant des dispositifs de mesure de courant et de tension de sortie ;
la répartition d'un signal horaire à l'unité de commande PWM du système de commande à l'aide d'un réseau de répartition temporelle comprenant un récepteur GPS et des commutateurs de réseau.

12. Procédé selon la revendication 11, dans lequel l'unité de commande PWM est exploitée de sorte que la tension continue interne dans la source de courant PWM soit de 3 à 8 fois supérieure à la tension de sortie nominale à un courant de sortie maximal et dans lequel le courant de sortie pendant une transition de courant est 2 à 3 fois supérieure à la puissance de sortie nominale.

13. Procédé selon la revendication 11, dans lequel la fréquence du signal de sortie à courant élevé est entre 0 et 50 Hz.

14. Procédé selon la revendication 11, comprenant en outre l'étape de hachage de la tension continue interne dans la source de courant PWM en le signal de sortie souhaité à une fréquence de commutation supérieure à la fréquence du signal de sortie, dans lequel la fréquence de commutation est entre 50 et 100 Hz.

15. Procédé selon la revendication 11, dans lequel la source de courant PWM comprend plusieurs transistors, le procédé comprenant en outre la commutation des plusieurs transistors en parallèle avec un retard de phase, ou la source de courant PWM comprend quatre modules inverseurs, le procédé comprenant en outre la commande des modules en paires.

16. Procédé selon la revendication 11, comprenant en outre l'étape de filtrage du signal de sortie à courant élevé à l'aide de condensateurs et/ou de bobines d'arrêt pour réduire l'ondulation et un bruit à haute fréquence.
